# EUROPÄISCHE PATENTSCHRIFT

(11) **EP 1 043 105 B1**
(45) Veröffentlichungstag und Bekanntmachung des Hinweises auf die Patenterteilung: **22.10.2008**
(21) Anmeldenummer: 00107613.2
(22) Anmeldetag: 07.04.2000
(51) Int. Cl.: B23K 3/03, B23K 3/02

(54) **Werkzeug zur Übertragung von Wärme von einer Wärmequelle auf ein zu bearbeitendes Werkstück und Verfahren zu dessen Herstellung**
Heat transfer tool used for transferring heat from a heat source onto a workpiece to be machined and method therefore
Outil de transfer de chaleur depuis une source de chaleur vers une pièce à usiner, et méthode pour le fabriquer

(30) Priorität: 09.04.1999 DE 19915928
(43) Veröffentlichungstag der Anmeldung: 11.10.2000
(73) Patentinhaber: Ersa GmbH, 97877 Wertheim (DE)
(72) Erfinder: Göckel, Heinrich, 97906 Faulbach (DE); Brönner, Joachim, 63939 Wörth am Main (DE)
(74) Vertreter: Böck, Bernhard

(56) Entgegenhaltungen:
- EP-A- 0 272 371
- WO-A-98/34748
- DE-A- 2 657 569
- US-A- 2 324 802
- US-A- 4 424 930
- US-A- 4 974 768
- US-A- 4 997 121

## Beschreibung

Die Erfindung betrifft ein Werkzeug nach dem Oberbegriff des Patentanspruchs 1 sowie ein Verfahren zur Herstellung dieses Werkzeugs.

Werkzeug im Sinn der vorliegenden Erfindung ist jedes Werkzeug, das zur Übertragung von Wärme von einer Wärmequelle auf ein zu bearbeitendes Werkstück dient, beispielsweise eine thermische Schneidspitze, eine Spitze zum thermischen Kunststoffschweißen oder dergleichen. Insbesondere, jedoch keineswegs ausschließlich, umfaßt der Begriff Werkzeug eine Lötspitze zum Löten von Werkstücken, beispielsweise in der Elektro- oder Elektronikindustrie.

Es sind Lötspitzen bekannt, die im wesentlichen aus einem Rohrabschnitt bestehen, der zunächst in einer Kombination von spanenden und spanlosen Fertigungsschritten in die bestimmungsgemäße Gestalt der Lötspitze gebracht wird. Danach wird die so erhaltene rohe Lötspitze im Bereich ihrer gesamten äußeren und inneren Oberfläche zur Verbesserung der Verschleiß- und Korrosionseigenschaften galvanisch mit Eisen plattiert sowie anschließend vernickelt und verchromt.

Diese bekannte Lötspitze weist den Nachteil auf, dass insbesondere die Erzielung einer gleichmäßigen Schichtdicke bei den notwendigen galvanischen Beschichtungsmaßnahmen regelmäßig nicht gewährleistet ist, da aufgrund der üblicherweise unregelmäßigen Gestalt der Lötspitzen insbesondere im Bereich der Kanten höhere Stromdichten als in den flächigen Bereichen auftreten, wodurch in den Bereichen höherer Stromdichten stärkere Fe-, Ni- oder Cr-Anlagerungen erfolgen. Daher ist zur Erzielung der geforderten Maßgenauigkeit regelmäßig eine spanende Nachbearbeitung erforderlich. Dies ist umständlich und kostenintensiv.

Aus der DE 26 57 569 A ist eine Löt- oder Entlötspitze bekannt, bei der auf einen konischen oder doppelkonischen Grundkörper aus einem Kupferwerkstoff eine Stahlkappe mit dazu formkomplementärer Innengeometrie aufgesetzt und durch Aufstauchen nach Art eins Hintergriffs befestigt wird. Die WO 98 34748 A beschreibt eine Lötspitze, bei der auf das axiale Ende eines Grundkörpers aus Kupfer eine fertig ausgeformte Kappe aus einem Eisenwerkstoff aufgesetzt und beispielsweise durch Kleben befestigt wird. Ferner ist aus der EP 0 272 371 A1 ein Verfahren zur Herstellung einer Lötspitze bekannt, bei dem eine becherartig geformte Lötspitze durch Tiefziehen aus einer mehrschichtigen Platine hergestellt wird.

Ausgehend von diesem Stand der Technik ist es die Aufgabe der vorliegenden Erfindung ein gattungsgemäßes Werkzeug zu schaffen, das einfach und kostengünstig herstellbar ist.

Diese Aufgabe wird durch ein Werkzeug nach der Lehre des Patentanspruchs 1 gelöst.

Es ist eine weitere Aufgabe der Erfindung, ein kostengünstiges und einfaches Verfahren zur Herstellung eines gattungsgemäßen Werkzeugs zu schaffen.

Diese Aufgabe wird durch ein Verfahren nach der Lehre des Patentanspruchs 8 gelöst.

Vorteilhafte Ausgestaltungen der Erfindung sind Gegenstand der Unteransprüche.

In zunächst an sich bekannter Weise weist das Werkzeug zur Übertragung von Wärme von einer Wärmequelle auf ein zu bearbeitendes Werkstück zunächst einen Grundkörper auf, der aus einem Material mit hoher Wärmeleitfähigkeit besteht, beispielsweise aus Kupfer oder Silber, der mittelbar oder unmittelbar mit einer Wärmequelle, beispielsweise einem Lötkolben, wärmeleitend und wärmeübertragend verbindbar ist.

Zumindest im Bereich der bestimmungsgemäßen Anlage am Werkstück ist der Grundkörper mit korrosions- und/oder verschleißhemmenden Mitteln versehen. Diese weisen erfindungsgemäß mindestens eine Hülse aus einem Material mit im Vergleich zum Material des Grundkörpers hoher Verschleiß- und/oder Korrosionsfestigkeit, insbesondere Stahl, Eisen oder einem eisenhaltigen Metall, auf, die im wesentlichen formschlüssig auf den Grundkörper aufbringbar ist.

Mit anderen Worten ist es die Idee der vorliegenden Erfindung, die insbesondere galvanische Plattierung nach dem Stand der Technik zu ersetzen durch eine Hülse aus einem entsprechenden Material, wobei unabbhängig von der gewünschten Form des Werkzeugs durch die entsprechend geformt Hülse korrosions- und/oder verschleißmindernde Mittel mit einer im wesentlichen gleichmäßigen Dicke, nämlich der Hülsenwanddicke, und definierten Außenmaßen zur Verfügung gestellt werden. Dadurch entfällt bei hoher Maßhaltigkeit die Notwendigkeit einer spanenden Nachbearbeitung. Zudem kann aufgrund der gleichmäßigen Dicke der Hülse eine signifikant erhöhte Standzeit des Werkzeugs erreicht werden. Ein weiterer Vorteil liegt ferner darin, dass ein vergleichsweise umweltbelastendes galvanisches Beschichtungsverfahren entfallen kann.

Der Grundkörper ist zumindest abschnittsweise im wesentlichen rohrförmig als Hohlprofil, oder stangenförmig als Vollprofil ausgebildet. Dabei kann ein rohrförmiges Hohlprofil insbesondere dann Verwendung finden, wenn das Werkzeug, beispielsweise eine Lötspitze, auf die Wärmequelle, beispielsweise einen Lötkolben, aufgesteckt werden soll, während ein stangenförmiges Vollprofil Verwendung finden kann, wenn die Lötspitze in eine entsprechende Aufnahme eines Lötkolbens eingesteckt werden soll.

Insbesondere wenn der Grundkörper rohr- oder stangenförmig ausgebildet ist, kann nach einem bevorzugten Ausführungsbeispiel der Grundkörper mindestens zwei Abschnitte unterschiedlichen Außendurchmessers aufweisen, wodurch sich im Längsschnitt ein stufenförmiger Aufbau ergibt. Dadurch kann beispielsweise ein Bereich größeren Durchmessers zur wärmeübertragenden Ankopplung an die Wärmequelle und ein Spitzenbereich kleineren Durchmessers zur bestimmungsgemäßen Übertragung der Wärme an das zu bearbeitende Werkstück gebildet werden.

Erfindungsgemäß ist die Hülse im wesentlichen rohrförmig ausgebildet, wobei der Rohrabschnitt zylindrisch oder in beliebiger anderer Form, beispielsweise im Querschnitt oval oder polygon oder in Längsrichtung konisch oder gestuft sein kann.

Erfindungsgemäß ist der Innendurchmesser der Hülse im wesentlichen derart formkomplementär zum Außendurchmesser im Bereich eines axialen Endes des Grundkörpers ausgebildet, dass die Hülse unter Herstellung eines im wesentlichen vollflächigen Kontaktes zwischen der Innenfläche der Hülse und der Außenfläche des Grundkörpers auf das axiale Ende des Grundkörpers aufgesteckt und dort befestigt ist.

Ohne den Boden der Erfindung zu verlassen, kann eine rohrförmige Hülse derart auf den Grundkörper aufgesteckt sein, dass der Grundkörper die Hülse vollständig durchragt, insbesondere aus dem spitzenseitigen Ende der Hülse hervorragt. Nach einem weiteren Ausführungsbeispiel jedoch weist die Hülse gegenüber dem axialen Ende des Grundkörpers einen zumindest geringfügigen Überstand auf. Dadurch kann erreicht werden, dass ein unerwünschter korrosiver Kontakt zwischen dem Material des Grundkörpers und dem zu bearbeitenden Werkstück bzw. den in der Regel hochkorrosiven Hilfsstoffen wie Lötzinn und Flußmittel verringert wird.

Nach einem besonders bevorzugten Ausführungsbeispiel der Erfindung ist die Hülse im Bereich des Überstandes geschlossen, wodurch insbesondere bei der Verwendung als Lötspitze jeglicher Kontakt zwischen Lötzinn und/oder Flußmittel einerseits und dem Grundkörper andererseits zuverlässig ausgeschlossen werden kann. Dabei kann der geschlossene Bereich der Hülse beispielsweise durch eine becherförmig geschlossene Gestalt der Hülse gebildet oder durch eine plastische Umformung der Spitze einer rohrförmig offenen Hülse erreicht werden.

Erfindungsgemäß weist der die Hülse aufweisende axiale Bereich des Werkzeugs eine im wesentlichen keilförmige, meißelförmige, schneidenförmige oder zugespitzte Gestalt auf.

Weiter kann das Werkzeug zumindest bereichsweise mit einer oxidationsmindernden Schicht versehen, insbesondere vernickelt sein. Dabei kann die Beschichtung beispielsweise nur im Bereich der Hülse, vorzugsweise jedoch im Bereich der gesamten Oberfläche des Werkzeugs, gegebenenfalls auch an der Innenoberfläche des Grundkörpers, angeordnet sein.

Zur weiteren Verbesserung des Korrosionsschutzes kann das Werkzeug zumindest bereichsweise verchromt sein. Dabei kann auch bei der Verwendung als Lötspitzc ein Annehmen von Lot an unerwünschten Stellen des Werkzeugs zuverlässig verhindert werden. Insbesondere im Bereich der eigentlichen Lotbahn kann ferner das Werkzeug zumindest bereichsweise in an sich bekannter Weise verzinnt sein.

Gemäß dem ebenfalls erfindungsgemäßen Verfahren zur Herstellung eines Werkzeugs zur Übertragung von Wärme von einer Wärmequelle auf ein zu bearbeitendes Werkstück, insbesondere einer Lötspitze, wird zunächst in einem ersten Verfahrensschritten ein Grundkörper aus einem Material mit hoher Wärmeleitfähigkeit, insbesondere Cu oder Ag, hergestellt. Anschließend erfolgt das Aufbringen einer Hülse in Form eines beidseitig offenen Rohrabschnitts aus einem Material mit hoher Verschleiß- und/oder Korrosionsfestigkeit, insbesondere Stahl, Eisen oder einem eisenhaltigen Metall auf den Grundkörper.

Erfindungsgemäß wird der Grundkörper durch Ablängen eines Rohrabschnitts aus einem Hohlprofil oder eines Stangenabschnitts aus einem Vollprofil hergestellt.

Weiter kann durch plastische Umformung mindestens eines axialen Endes des Grundkörpers ein Abschnitt veränderten Durchmessers erhalten werden. Dabei kann der Durchmesser des axialen Endes beispielsweise durch Stauchen vergrößert werden. Vorzugsweise erfolgt jedoch eine Verringerung des Durchmessers durch Kalthämmern, Schmieden, Kneten oder dergleichen. Dabei kann insbesondere bei einem rohrförmigen Hohlprofil des Grundkörpers eine Umformung derart erfolgen, dass das Hohlprofil in diesem Bereich zu einem quasi Vollprofil zusammengedrückt wird.

Nach einem Ausführungsbeispiel kann die Hülse zur Befestigung nach Art einer Presspassung auf das umgeformte axiale Ende des Grundkörpers aufgepresst werden. Alternativ dazu kann jedoch auch die Hülse nach Art einer Übergangspassung oder mit geringem radialen Spiel auf das umgeformte axiale Ende des Grundkörpers aufgesteckt und durch eine gemeinsame plastische Umformung und/oder eine Kaltverschweißung von Grundkörper und Hülse in diesem Bereich insbesondere durch Kalthämmern, Kaltschmieden, Kneten oder dergleichen mit dem Grundkörper verbunden werden.

Insbesondere zur Verbesserung der Maßhaltigkeit kann weiter vor dem Aufstecken der rohrförmigen Hülse auf das axiale Ende des Grundkörpers dieser Bereich auf einen vorbestimmten Außendurchmesser, im Regelfall im wesentlichen den Innendurchmesser der Hülse, reduziert, insbesondere abgedreht werden. Dabei kann in vorteilhafter Weise zusätzlich ein stufenartiger Absatz am Grundkörper gebildet werden, der als axialer Anschlag beim Aufstecken der Hülse dienen kann.

Im Folgenden wird die Erfindung anhand lediglich ein Ausführungsbeispiel darstellender Zeichnungen näher erläutert. Es zeigt
- **Fig. 1**: in schematischer nicht maßstäblicher Darstellung im Längsschnitt einen Grundkörper aus Kupfer zur Herstellung eines Werkzeugs in Form einer Lötspitze;
- **Fig. 2**: in einer der Fig. 1 entsprechenden Darstellung den Grundkörper nach Fig. 1 in teilweiser Ansicht, mit durchmesserreduziertem axialen Ende;
- **Fig. 3**: den Grundkörper nach den Fig. 1 und 2 mit auf das axiale Ende aufgesteckter Hülse;

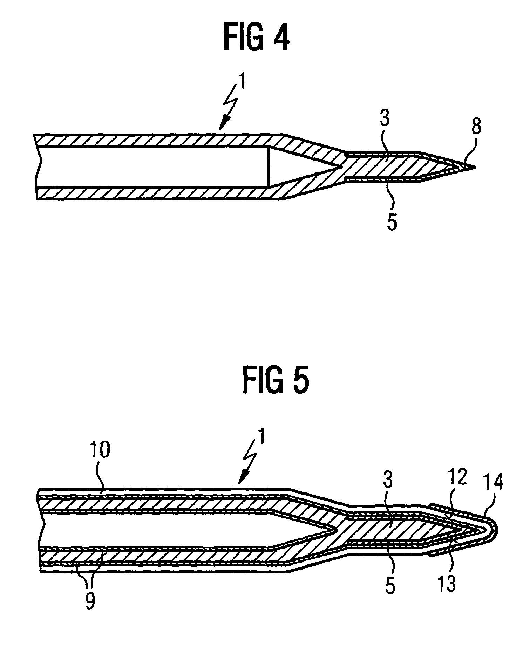

- **Fig. 4**: den Grundkörper nach Fig. 3 mit kegelförmig zugespitztem axialen Ende; und
- **Fig. 5**: das fertige Werkzeug mit lediglich schematisch angedeuteter mehrstufiger Beschichtung.

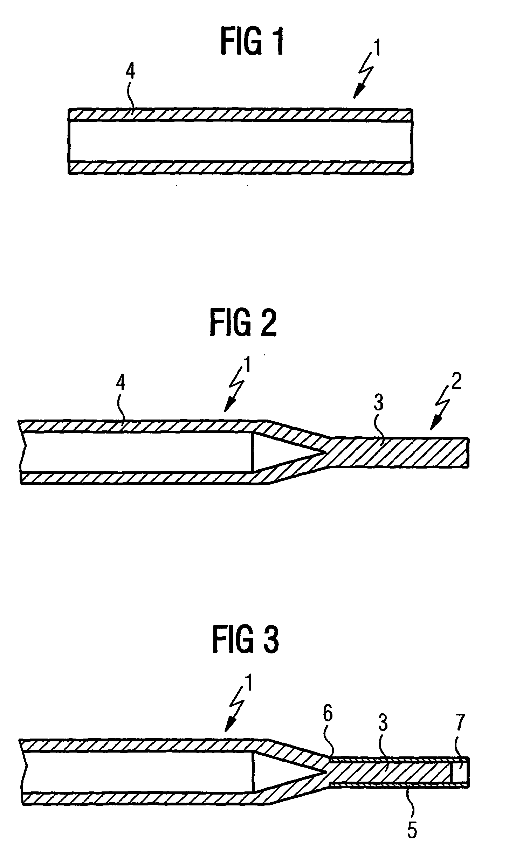

In Fig. 1 ist schematisch ein Grundkörper 1 in Form eines bereits beispielsweise von einem Stangenmaterial abgelängten kreiszylindrischen Rohrabschnitts aus Kupfer, insbesondere einem hochwärmeleitfähigen Elektrolytkupfer, dargestellt. Der Grundkörper 1, der auch aus einer spanend gefertigten oder gegossenen Hülse oder einem Vollmaterial bestehen kann, weist einen freien Innendurchmesser auf, der so gewählt ist, dass das fertige Werkzeug, hier eine Lötspitze, auf einen in den Figuren nicht dargestellten Lötkolben aufsteckbar und dort wärmeüberragend befestigbar ist. Alternativ dazu kann die Lötspitze auch in eine entsprechende Ausnehmung eines Lötkolbens bzw. einer Lötvorrichtung eingesteckt werden.

Zur Herstellung der erfindungsgemäßen Lötspitze wird in einem ersten plastischen Umformvorgang, beispielsweise durch Kalthämmern, Kaltschmieden oder Kneten der rohrabschnittförmige Grundkörper 1 im Bereich seines ersten axialen Endes 2 derart verjüngt, dass sich ein axialer Endbereich 3 mit im wesentlichen zylindermantelförmiger Außenfläche ergibt. Dabei wird gleichzeitig in diesem Bereich der Innendurchmesser auf praktisch Null reduziert, so dass sich ein quasi stangenförmiges Vollmaterial ergibt, das aufgrund der vorausgegangenen Kaltumformung eine höhere Festigkeit als der rohrförmige Bereich 4 des Grundkörpers 1 aufweist.

In einem weiteren Fertigungsschritt wird beim hier dargestellten Ausführungsbeispiel der axiale Endbereich 3 auf eine vorgegebene Länge abgelängt, wie durch die strichlierte Linie in Fig. 2 schematisch angedeutet ist. Ferner wird der axiale Endbereich 3 bei dem hier gezeigten Ausführungsbeispiel auf einen zumindest geringfügig kleineren Außendurchmesser abgedreht, um insbesondere eine hohe Maßgenauigkeit des Spitzenbereichs 3 zu erreichen.

Auf den axialen Endbereich 3 wird eine im wesentlichen rohrförmige Hülse 5 aus kaltverformbarem korrosionsbeständigem, insbesondere warmkorrosionsbeständigem Material, z.B. Fe, aufgesteckt, wobei der Außendurchmesser des axialen Endbereichs 3 im wesentlichen dem Innendurchmesser der Hülse 5 entspricht. Dabei kann das Aufstecken nach Art einer Spielpassung, Übergangspassung oder auch Presspassung erfolgen. Die Hülse 5 gelangt beim Aufstecken an einem stufenförmigen Absatz 6 des axialen Endbereichs 3 zur Anlage, der sich durch das Abdrehen dieses Bereichs ergibt. Somit wird eine genau definierte Position der Hülse 5 auf dem axialen Endbereich 3 erreicht. Die Hülse 5 weist eine axiale Länge auf, die größer als die Länge des axialen Endbereichs 3 bis zum Absatz 6 ist, so dass sich ein geringfügiger axialer Überstand 7 der Hülse 5 gegenüber dem axialen Endbereich 3 ergibt.

In einem weiteren plastischen Umformvorgang, beispielsweise wiederum durch Kalthämmern, Kaltschmieden oder Kneten, wird die Hülse 5 gemeinsam mit dem darin angeordneten Bereich des axialen Endbereichs 3 derart verformt, dass sich zum einen eine feste Verbindung von Hülse 5 und axialem Endbereich 3 und damit einen guten Wärmeübergang bewirkende flächige Anlage der Innenfläche der Hülse 5 an der Außenumfangsfläche des axialen Endbereichs 3 ergibt, wobei auch eine Kaltverschweißung in diesem Bereich erfolgen kann, und zum anderen eine kegelförmige Spitze 8 gebildet wird, die die Hülse 5 nach vorne ab- bzw. verschließt. Dabei tritt aufgrund des Überstandes 7 der Hülse kein Kupfermaterial des Spitzenbereichs 3 aus. Zur Verbesserung der Maßhaltigkeit kann nach diesem Umformvorgang die Spitze 8 auf Maß gekürzt werden.

In einem weiteren Umformvorgang, beispielsweise durch Kalthämmern, Pressen oder Drücken wird bei dem Ausführungsbeispiel nach den Figuren die zylindrische Spitze 8 nach Art eines Keils oder Meißels mit zwei einander gegenüberliegenden Keilflächen und einer Keilkante oder Keilschneide geformt. Diese Form ist jedoch grundsätzlich beliebig und hängt ausschließlich vom jeweiligen Anwendungsfall des fertigen Werkzeugs ab.

Zur Verbesserung der korrosiven Eigenschaften des Werkzeugs wird dieses anschließend in an sich bekannter Weise galvanisch mit einer Nickelschicht 9 und einer Chromschicht 10 versehen, wobei im Gegensatz zur Hülse 5 diese Beschichtungen im wesentlichen die gesamte Lötspitze, abgesehen vom eigentlichen Lötbereich, den Lötbahnen, innen und außen bedecken können. Zur Verbesserung der Löteigenschaften wird der eigentliche Lötbereich, die beiden keilflächenförmigen Lötbahnen 12 und 13, verzinnt.

## Patentansprüche

1. Werkzeug zur Übertragung von Wärme von einer Wärmequelle auf ein zu bearbeitendes Werkstück, insbesondere Lötspitze, mit einem Grundkörper (1) aus einem Material mit hoher Wärmeleitfähigkeit, der mittelbar oder unmittelbar mit einer Wärmequelle wärmeleitend verbindbar und zumindest im Bereich der bestimmungsgemäßen Anlage am Werkstück mit korrosions- und/oder verschleißhemmenden Mitteln versehen ist, wobei die korrosions- und/oder verschleißhcmmenden Mittel mindestens eine Hülse (5) aus einem Material mit hohcr Verschleiß- und/oder Korrosionsfestigkeit, insbesondere Stahl, Eisen oder einem eisenhaltigen Metall, aufweisen, die im Wesentlichen formschlüssig auf den Grundkörper (1) aufgebracht ist,
**dadurch gekennzeichnet,**
**dass** der Grundkörper (1) aus einem abgelängten Rohr- oder Stangenabschnitt gebildet wird, die Hülse (5) als beidseitig offener Rohrabschnitt ausgebildet ist, und die Hülse (5) einen Innendurchmesser aufweist, der derart formkomplementär zum Außendurchmesser im Bereich eines axialen Endes (3) des Grundkörpers (1) ist, dass die Hülse (5) unter Herstellung eines im Wesentlichen vollflächigen Kontaktes zwischen der Innenfläche der Hülse (5) und der Außenfläche des Grundkörpers (1) auf das axiale Ende (3) des Grundkörpers (1) aufgestechkt und dort durch plastische Umformung gemeinsam mit dem in der Hülse (5) befindlichen axialen Ende (3) des Grundkörpers (1) befestigt ist, wobei der die Hülse (5) aufweisende axiale Bereich des Werkzeugs eine im Wesentlichen keilförmige, meißelförmige, schneidenförmige oder zugespitzte Gestalt aufweist.

2. Werkzeug nach Anspruch 1,
**dadurch gekennzeichnet,**
**dass** der Grundkörper (1) mindestens zwei Abschnitte unterschiedlichen Außendurchmessers aufweist.

3. Werkzeug nach Anspruch 1 oder 2,
**dadurch gekennzeichnet,**
**dass** die Hülse (5) gegenüber dem axialen Ende (3) des Grundkörpers (1) einen zumindest geringfügigen Überstand (7) aufweist.

4. Werkzeug nach Anspruch 3,
**dadurch gekennzeichnet,**
**dass** die Hülse (5) im Bereich des Überstandes (7) geschlossen ist.

5. Werkzeug nach einem der Ansprüche 1 bis 4,
**dadurch gekennzeichnet,**
**dass** das Werkzeug zumindest bereichsweise vernickelt (9) ist.

6. Werkzeug nach einem der Ansprüche 1 bis 5,
**dadurch gekennzeichnet,**
**dass** das Werkzeug zumindest bereichsweise verchromt (10) ist.

7. Werkzeug nach einem der Ansprüche 1 bis 6,
**dadurch gekennzeichnet,**
**dass** das Werkzeug zumindest bereichsweise verzinnt (12,13) ist.

8. Verfahren zur Herstellung eines Werkzeugs zur Übertragung von Wärme von einer Wärmequelle auf ein zu bearbeitendes Werkstück, insbesondere einer Lötspitze, mit folgenden Verfahrensschritten:
a. Herstellung eines Grundkörpers (1)durch Ablängen eines Rohrabschnitts aus einem Hohlprofil oder eines Stangenabschnitts aus einem Vollprofil aus einem Material mit hoher Wärmeleitfähigkeit, insbesondere Cu oder Ag;
b. Aufbringen einer Hülse (5) in Form eines beidseitig offenen Rohrabschnittes aus einem Material mit hoher Verschleiß-und/oder Korrosionsfestigkeit, insbesondere Stahl, Eisen oder einem eisenhaltigen Metall auf ein axiales Ende (3) des Grundkörpers (1); und
c. Befestigung der Hülse (5) am Grundkörper (1) durch gemeinsame plastische Umformung von Hülse (5) und dem in der Hülse (5) befindlichen axialen Ende (3) des Grundkörpers (1), wobei das die Hülse (5) aufweisende axiale Ende (3) des Werkzeugs im Wesentlichen keilförmig, meißelförmig, schneidenförmig oder zugespitzt geformt wird.

9. Verfahren nach Anspruch 8,
**dadurch gekennzeichnet,**
**dass** durch plastische Umformung mindestens eines axialen Endes (3) des Grundkörpers (1) ein Abschnitt veränderten Durchmessers erhalten wird.

10. Verfahren nach Anspruch 9,
**dadurch gekennzeichnet,**
**dass** die Hülse (5) nach Art einer Presspassung auf das umgeformte axiale Ende (3) des Grundkörpers (1) aufgepresst ist.

11. Verfahren nach Anspruch 9,
**dadurch gekennzeichnet,**
**dass** die Hülse (5) nach Art einer Übergangspassung oder mit geringem radialen Spiel auf das umgeformte axiale Ende (3) des Grundkörpers (1) aufgesteckt ist.

12. Verfahren nach einem der Ansprüche 8 bis 11,
**dadurch gekennzeichnet,**
**dass** vor dem Aufstecken der Hülse (5) auf das axiale Ende des Grundkörpers (1) dieser Bereich auf einen vorbestimmten Außendurchmesser reduziert, insbesondere abgedreht wird.

13. Verfahren nach einem der Ansprüche 8 bis 12,
**dadurch gekennzeichnet,**
**dass** das Werkzeug zumindest bereichsweise, vorzugsweise in einem galvanischen Beschichtungsverfahren, vernickelt wird.

14. Verfahren nach einem der Ansprüche 8 bis 13,
**dadurch gekennzeichnet,**
**dass** das Werkzeug zumindest bereichsweise, vorzugsweise in einem galvanischen Beschichtungsverfahren, verchromt wird.

15. Verfahren nach einem der Ansprüche 8 bis 14,
**dadurch gekennzeichnet,**
**dass** das Werkzeug zumindest bereichsweise verzinnt wird.

## Claims

1. Tool for transferring heat from a heat source to a workpiece to be worked, in particular a soldering tip, with a basic body (1) of a material with high thermal conductivity, which is indirectly or directly connectable to a heat source in a heat-conducting manner and is provided at least in the area of standard application to the workpiece with corrosion- and/or wear-inhibiting means, wherein the corrosion- and/or wear-inhibiting means have at least a sleeve (5) of a material with high wear and/or corrosion resistance, in particular steel, iron or a metal containing iron, which sleeve is affixed onto the basic body (1) in substantially a form-closing manner,
**characterized in that**
the basic body (1) is formed from a cut-off tubular section or bar section, the sleeve (5) is implemented as a tubular section open on both sides, and the sleeve (5) has an internal diameter which is complementary in shape to the outer diameter in the area of an axial end (3) of the basic body (1) in such a way that the sleeve (5) is placed on the axial end (3) of the basic body (1), producing substantially all-over contact between the inner surface of the sleeve (5) and the outer surface of the basic body (1), and is fastened there by plastic shaping together with the axial end (3) of the basic body (1), which is situated in the sleeve (5), the axial area of the tool having the sleeve (5) having a substantially wedge-shaped, chisel-shaped, cutter-shaped or tapered shape.

2. Tool according to claim 1,
**characterized in that**
the basic body (1) has at least two sections of differing outer diameter.

3. Tool according to one of claims 1 to 2,
**characterized in that**
the sleeve (5) has at least a slight projection (7) in relation to the axial end (3) of the basic body (1).

4. Tool according to claim 3,
**characterized in that**
the sleeve (5) is closed in the area of the projection (7).

5. Tool according to one of claims 1 to 4,
**characterized in that**
the tool is nickel-plated (9) at least in areas.

6. Tool according to one of claims 1 to 5,
**characterized in that**
the tool is chromium-plated (10) at least in areas.

7. Tool according to one of claims 1 to 6,
**characterized in that**
the tool is tin-plated (12, 13) at least in areas.

8. Method for manufacturing a tool for transferring heat from a heat source to a workpiece to be worked, in particular a soldering tip, with the following manufacturing steps:
a) production of a basic body (1) by cutting off a tubular section from a hollow profile or a bar section from a solid profile of a material with high thermal conductivity, in particular Cu or Ag;
b) affixing of a sleeve (5) having the shape of a tubular section open on both sides of a material with high wear and/or corrosion resistance, in particular steel, iron or a metal containing iron, onto an axial end (3) of the basic body (1); and
c) fastening of the sleeve (5) to the basic body (1) by plastic shaping of the sleeve (5) together with the axial end (3) of the basic body (1), which is situated in the sleeve (5), the axial end (3) of the tool having the sleeve (5) being formed to be substantially wedge-shaped, chisel-shaped, cutter-shaped or tapered.

9. Method according to claim 8,
**characterized in that**
a section of altered diameter is obtained by plastic shaping of at least one axial end (3) of the basic body (1).

10. Method according to claim 9,
**characterized in that**
the sleeve (5) is pressed onto the shaped axial end (3) of the basic body (1) in the manner of a press fit.

11. Method according to claim 9,
**characterized in that**
the sleeve (5) is placed onto the shaped axial end (3) of the basic body (1) in the manner of a transition fit or with little radial play.

12. Method according to one of claims 8 to 11,
**characterized in that**
prior to placing of the sleeve (5) onto the axial end of the basic body (1), this area is reduced, in particular turned off, to a predetermined outer diameter.

13. Method according to one of claims 8 to 12,
**characterized in that**
the tool is nickel-plated at least in areas, preferably in an electroplating process.

14. Method according to one of claims 8 to 13,
**characterized in that**
the tool is chromium-plated at least in areas, preferably in an electroplating process.

15. Method according to one of claims 8 to 14,
**characterized in that**
the tool is tin-plated at least in areas.

## Revendications

1. Outil destiné à transmettre de la chaleur d'une source de chaleur à une pièce à travailler, en particulier une buse de chalumeau, avec un corps de base (1) en un matériau ayant une conductibilité thermique élevée, qui est raccordable, indirectement ou directement du point de vue thermoconduction, à une source de chaleur et est muni, au moins dans la zone de l'installation conforme aux dispositions sur la pièce, de moyens inhibiteurs de corrosion et/ou d'usure, pour lequel les moyens inhibiteurs de corrosion et/ou d'usure présentent au moins un manchon (5) en un matériau ayant une résistance élevée à l'usure et/ou la corrosion, en particulier de l'acier, du fer ou un métal ferreux, qui est monté pour l'essentiel en épousant la forme sur le corps de base (1),
**caractérisé en ce que**
le corps de base (1) est constitué d'une section de tube ou de barre découpée en longueur, le manchon (5) est constitué comme une section de tube ouverte des deux côtés et le manchon (5) présente un diamètre intérieur qui est complémentaire en forme au diamètre extérieur dans la zone d'une extrémité axiale (3) du corps de base (1) de telle sorte que le manchon (5) est placé, en créant un contact pour l'essentiel sur toute la surface entre la surface intérieure du manchon (5) et la surface extérieure du corps de base (1), sur l'extrémité axiale (3) du corps de base (1) et y est fixé par déformation plastique ensemble avec l'extrémité axiale (3) du corps de base (1) se trouvant dans le manchon (5), pour lequel la zone axiale de l'outil présentant le manchon (5) présente une forme pour l'essentiel de coin, de burin, de tranchant ou de pointe.

2. Outil selon la revendication 1,
**caractérisé en ce que**
le corps de base (1) présente au moins deux sections de diamètre extérieur différent.

3. Outil selon la revendication 1 ou 2,
**caractérisé en ce que**
le manchon (5) présente une saillie (7) pour le moins faible par rapport à l'extrémité axiale (3) du corps de base (1).

4. Outil selon la revendication 3,
**caractérisé en ce que**
le manchon (5) est fermé dans la zone de la saillie (7).

5. Outil selon l'une des revendications 1 à 4,
**caractérisé en ce que**
l'outil est nickelé (9) au moins par secteurs.

6. Outil selon l'une des revendications 1 à 5,
**caractérisé en ce que**
l'outil est chromé (10) au moins par secteurs.

7. Outil selon l'une des revendications 1 à 6,
**caractérisé en ce que**
l'outil est étamé (12, 13) au moins par secteurs.

8. Procédé pour la fabrication d'un outil destiné à transmettre de la chaleur à partir d'une source de chaleur à une pièce à travailler, en particulier d'une buse de chalumeau, avec les étapes de procédé suivantes :
a. fabrication d'un corps de base (1) par découpage en longueur d'une section de tube à partir d'un profil creux ou d'une section de barre à partir d'un profil plein en un matériau ayant une conductibilité thermique élevée, en particulier Cu ou Ag,
b. application d'un manchon (5) sous la forme d'une section de tube ouverte aux deux extrémités en un matériau ayant une résistance élevée à l'usure et/ou à la corrosion, en particulier de l'acier, du fer ou un métal ferreux, sur une extrémité axiale (3) du corps de base (1) ; et
c. fixation du manchon (5) sur le corps de base (1) par déformation plastique commune du manchon (5) et de l'extrémité axiale (3) du corps de base (1) se trouvant dans le manchon (5), pour lequel l'extrémité axiale (3) de l'outil comportant le manchon (5) est formée pour l'essentiel en forme de coin, de burin, de tranchant ou de pointe.

9. Procédé selon la revendication 8,
**caractérisé en ce que**
par déformation plastique au moins d'une extrémité axiale (3) du corps de base (1) on obtient une section de diamètre modifié.

10. Procédé selon la revendication 9,
**caractérisé en ce que**
le manchon (5) est emmanché selon le principe d'un assemblage forcé sur l'extrémité axiale (3) déformée du corps de base (1).

11. Procédé selon la revendication 9,
**caractérisé en ce que**
le manchon (5) est placé selon le principe d'un ajustement de transition ou avec un faible jeu radial sur l'extrémité axiale déformée (3) du corps de base (1).

12. Procédé selon l'une des revendications 8 à 11,
**caractérisé en ce qu'**
avant la fixation du manchon (5) sur l'extrémité axiale du corps de base (1), ce secteur est réduit, en particulier tourné, à un diamètre extérieur prédéfini.

13. Procédé selon l'une des revendications 8 à 12,
**caractérisé en ce que**
l'outil est nickelé au moins par secteurs, de préférence dans un procédé de revêtement galvanique.

14. Procédé selon l'une des revendications 8 à 13,
**caractérisé en ce que**
l'outil est chromé au moins par secteurs, de préférence dans un procédé de revêtement galvanique.

15. Procédé selon l'une des revendications 8 à 14,
**caractérisé en ce que**
l'outil est étamé au moins par secteurs.
